# EUROPEAN PATENT SPECIFICATION

(11) **EP 2 588 542 B1**
(45) Date of publication and mention of the grant of the patent: **04.06.2014**
(21) Application number: 11730618.3
(22) Date of filing: 28.06.2011
(51) Int. Cl.: E04D 7/00, C09D 1/00, C09D 7/12, B05D 7/00, C09D 123/08, E04D 5/10, E04D 11/02, C08L 23/08, C08K 3/26, C08K 3/00, C04B 28/02, C04B 28/06, C04B 111/00, C08K 3/36

(54) **3-LAYER COATING SYSTEMS BASED ON MINERAL BINDERS**
3-SCHICHT BESCHICHTUNGSSYSTEME ENTHALTEND MINERALISCHE BINDEMITTEL
3-COUCHES SYSTÈMES DE REVÊTEMENT À BASE DE LIANTS MINÉRAUX

(30) Priority: 30.06.2010 AE 7242010
(43) Date of publication of application: 08.05.2013
(73) Proprietor: Wacker Chemie AG, 81737 München (DE)
(72) Inventor: SANAOBAR, Mohammed, Dubai (AE); BEZLER, Jürgen, 84489 Burghausen (DE); LUTZ, Hermann, 84547 Emmerting (DE)
(74) Representative: Ege, Markus
(86) International application number: PCT/EP2011/060806
(87) International publication number: WO 2012/000987

(56) References cited:
- EP-A1- 1 350 900
- WO-A1-2008/109325
- AU-A1- 2006 230 666
- GB-A- 1 593 249
- US-A1- 2003 088 045
- DATABASE WPI Week 200934 Thomson Scientific, London, GB; AN 2009-H89462 XP002663519, & CN 101 413 326 A (ZHANG J) 22 April 2009 (2009-04-22)

## Description

The invention relates to coating systems, particularly roofing systems, comprising three layers on the basis of mineral binders, fillers, polymers as well as processes for the preparation of such coating systems.

In construction engineering it is very common to prepare coating systems comprising a number of different layers in order to fulfill the requirements for heat and sound insulation as well as protection against rain or snow. Due to the long-term use of buildings and the high costs for their renovation it is of high importance that each constructional unit of buildings satisfies high demands. This is particularly true for coating systems exposed to extreme temperatures and water, such as roofing systems. Thus, the durability of coating systems is of particular interest.

Therefore a number of coating systems have been developed up to now. Five or more layered coating systems are very common. Such systems comprise for instance a primer prepared from a dissolved bitumen, secondly a bitumen membrane or a synthetic membrane, thirdly insulations boards, such as extruded polystyrene, fourthly geo textile fabric, mainly of polyester or polypropylene in form of woven, and finally a gravel top layer. The preparation of such multilayered coating systems is very labor, cost- and time-intensive. Furthermore, many different components have to be applied resulting in a complex logistic at the building site. Such or related systems are described for example in FR-A 2554151, US 4272936, KR 20040025261, CN 1417432, CN 101413326, CN 201195921 or CN 1777893.

US 2003/088045 describes the use of polyurethane dispersions for improved mechanical properties in top layers, as well as in sealing layers.

It was therefore an object to provide coating systems, particularly roofing systems, which show high technical performance, such as a very high durability and very good insulation properties, and which is based on fewer or more similarly processable constituents, and which may be prepared in a more time and cost effective manner.

These and further objects were achieved with coating systems comprising a) a base layer, b) a middle layer and c) a top layer,
whereby each of the layers a), b) and c) is based on mineral binder selected from the group comprising cement, gypsum, waterglass and lime hydrate,
filler selected from the group comprising carbonates, silicates, quartz flour, quartz sand, highly disperse silica, feldspar, heavy spar, light spar, fillers having a pozzolanic reaction, rubber shreds and fibrous fillers,
polymers from one or more ethylenically unsaturated monomers from the group comprising vinyl esters of carboxylic acids having from 1 to 15 carbon atoms, methacrylic esters or acrylic esters of carboxylic acids with unbranched or branched alcohols having from 1 to 15 carbon atoms, olefins and dienes, vinylaromatics and vinyl halides and
optional further additives, and
whereby the middle layer contains additionally light weight aggregates selected from the group comprising vermiculite, perlite, poraver glass beads, hollow glass spheres, pumice, expanded clays, shales and sintered pulverised fuel ash.

Light weight aggregates are generally known as low density aggregates, such as vermiculite, perlite, poraver glass beads, hollow glass spheres, pumice, expanded clays or shales, like ridgelite or utelite, sintered pulverised fuel ash.

Suitable polymers from ethylenically unsaturated monomers are those based on one or more monomers from the group comprising vinyl esters of carboxylic acids having from 1 to 15 carbon atoms, methacrylic esters or acrylic esters of carboxylic acids with unbranched or branched alcohols having from 1 to 15 carbon atoms, olefins and dienes, vinylaromatics and vinyl halides.

Preferred vinyl esters are vinyl acetate, vinyl propionate, vinyl butyrate, vinyl-2-ethylhexanoate, vinyl laurate, 1-methylvinyl acetate, vinyl pivalate and vinyl esters of α-branched monocarboxylic acids having from 9 to 13 carbon atoms, for example VeoVa9R or VeoVa10R (trade names of Shell). Particular preference is given to vinyl acetate.

Preferred methacrylic esters or acrylic esters are methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate. Preference is given to methyl acrylate, methyl methacrylate, n-butyl acrylate and 2-ethylhexyl acrylate.

Preferred olefins and dienes are ethylene, propylene and 1,3-butadiene. Preferred vinylaromatics are styrene and vinyltoluene. A suitable vinyl halide is vinyl chloride.

If appropriate, from 0.05 to 20% by weight, preferably from 1 to 10% by weight, based on the total weight of the base polymer, of auxiliary monomers can be copolymerized in. Examples of auxiliary monomers are ethylenically unsaturated monocarboxylic and dicarboxylic acids, preferably acrylic acid, methacrylic acid, fumaric acid and maleic acid; ethylenically unsaturated carboxamides and carboxylic nitriles, preferably acrylamide and acrylonitrile; monoesters and diesters of fumaric acid and maleic acid, e.g. the diethyl and diisopropyl esters, and also maleic anhydride, ethylenically unsaturated sulfonic acids or their salts, preferably vinylsulfonic acid, 2-acrylamido-2-methylpropanesulfonic acid. Further examples are precross-linking comonomers such as multiply ethylenically unsaturated comonomers, for example divinyl adipate, diallyl maleate, allyl methacrylate or triallyl cyanurate, or postcrosslinking comonomers, for example acrylamidoglycolic acid (AGA), methyl methylacrylamidoglycolate (MAGME), N-methylolacrylamide (NMA), N-methylolmethacrylamide (NMMA), N-methylol allyl carbamate, alkyl ethers such as isobutoxy ether or the ester of N-methylolacrylamide, of N-methylolmethacrylamide and of N-methylol allyl carbamate. Also suitable are epoxy-functional comonomers such as glycidyl methacrylate and glycidyl acrylate. Further examples are silicon-functional comonomers such as acryloxypropyltri-(alkoxy)silanes and methacryloxypropyltri(alkoxy)silanes, vinyltrialkoxysilanes and vinylmethyldialkoxysilanes, in which, for example, methoxy, ethoxy and ethoxypropylene glycol ether radicals can be present as alkoxy groups. Mention may also be made of monomers having hydroxy or CO groups, for example hydroxyalkyl methacrylates and acrylates, e.g. hydroxyethyl, hydroxypropyl or hydroxybutyl acrylate or methacrylate and also compounds such as diacetoneacrylamide and acetylacetoxyethyl acrylate or methacrylate. Further examples are vinyl ethers such as methyl, ethyl or isobutyl vinyl ether.

Examples of suitable homopolymers and copolymers are vinyl ester homopolymers, copolymers of one or more vinyl esters with ethylene, copolymers of vinyl acetate with ethylene and one or more further vinyl esters, copolymers of one or more vinyl esters with ethylene and acrylic esters, styrene-acrylic ester copolymers, styrene-1,3-butadiene copolymers. copolymers of one or more vinyl halogenides with α-olefins, such as ethylene or propylene, and/or vinyl esters, such as vinyl acetate, and/or (meth)acrylic esters of unbranched or branched alcohols having from 1 to 15 carbon atoms, such as methyl(meth) acrylate, ethyl (meth)acrylate, propyl (meth)acrylate, n-butyl (meth)acrylate, t-butyl (meth)acrylate, or 2-ethylhexyl (meth)acrylate,

Preference is given to vinyl acetate homopolymers; copolymers of vinyl acetate with from 1 to 40% by weight of ethylene; copolymers of vinyl acetate with from 1 to 40% by weight of ethylene and from 1 to 50% by weight of one or more further comonomers from the group comprising vinyl esters having from 1 to 12 carbon atoms in the carboxylic acid radical, e.g. vinyl propionate, vinyl laurate, vinyl esters of alpha-branched carboxylic acids having from 9 to 13 carbon atoms, e.g. VeoVa9R, VeoVa10R, VeoVa11R; copolymers of vinyl acetate, from 1 to 40% by weight of ethylene and preferably from 1 to 60% by weight of acrylic esters of unbranched or branched alcohols having from 1 to 15 carbon atoms, in particular n-butyl acrylate or 2-ethylhexyl acrylate; and copolymers comprising from 30 to 75% by weight of vinyl acetate, from 1 to 30% by weight of vinyl laurate or vinyl esters of an alpha-branched carboxylic acid having from 9 to 11 carbon atoms, and also from 1 to 30% by weight of acrylic esters of unbranched or branched alcohols having from 1 to 15 carbon atoms, in particular n-butyl acrylate or 2-ethylhexyl acrylate, which may additionally contain from 1 to 40% by weight of ethylene; copolymers comprising vinyl acetate, from 1 to 40% by weight of ethylene and from 1 to 60% by weight of vinyl chloride; copolymers comprising from 30 to 75% by weight of vinyl chloridee, from 1 to 30% by weight of vinyl laurate or vinyl esters of an alpha-branched carboxylic acid having from 9 to 11 carbon atoms, and also from 1 to 40% by weight of ethylene; where the polymers can additionally contain the above-mentioned auxiliary monomers in the amounts indicated and the figures in % by weight in each case add up to 100% by weight.

Preference is also given to (meth)acrylic ester polymers such as copolymers of n-butyl acrylate or 2-ethylhexyl acrylate or copolymers of methyl methacrylate with n-butyl acrylate and/or 2-ethylhexyl acrylate and, if appropriate, ethylene; styrene-acrylic ester copolymers comprising one or more monomers from the group consisting of methyl acrylate, ethyl acrylate, propyl acrylate, n-butyl acrylate, 2-ethylhexyl acrylate; vinyl acetate-acrylic ester copolymers comprising one or more monomers from the group consisting of methyl acrylate, ethyl acrylate, propyl acrylate, n-butyl acrylate, 2-ethylhexyl acrylate and, if appropriate, ethylene; styrene-1,3-butadiene copolymers; vinyl halogenide polymers such as copolymers of vinyl chloride and ethylene; where the polymers can additionally contain the abovementioned auxiliary monomers in the amounts indicated and the figures in % by weight in each case add up to 100% by weight.

The monomers and the proportions by weight of the comonomers are chosen so that, in general, a glass transition temperature Tg of from -50°C to +50°C, preferably from -30°C to +40°C, results. The glass transition temperature Tg of the polymers can be determined in a known way by means of differential scanning colorimetry (DSC). The Tg can also be calculated approximately beforehand by means of the Fox equation. According to Fox T. G., Bull. Am. Physics Soc. 1, 3, page 123 (1956): 1/Tg = x1/Tg1 + x2/Tg2 + ... + xn/Tgn, where xn is the mass fraction (% by weight/100) of the monomer n and Tgn is the glass transition temperature in Kelvin of the homopolymer of the monomer n. Tg values for homopolymers are given in Polymer Handbook 2nd Edition, J. Wiley & Sons, New York (1975).

The polymers are prepared in a manner known per se, preferably in aqueous medium, for usually by the emulsion polymerization process, as described in DE-A 102006007282 for example. Use may be made either of emulsifier-stabilized dispersions or of dispersions stabilized with protective colloid. The dispersions contain preferably protective colloids in amounts of 1 to 20 weight percent, based on the total weight of the monomers. The protective colloids may be anionic or preferably non-ionic or cationic or combinations of non-ionic and cationic protective colloids. Preferred non-ionic protective colloids are polyvinyl alcohols. Suitable cationic protective colloids are polymers having a cationic charge. Such polymers are described, for example, in E. W. Flick, Water-Soluble Resins - an Industrial Guide, Noyes Publications, Park Ridge, N.J., 1991. To prepare polymers in form of water-redispersible polymer powders, the resultant polymers in form of aqueous dispersions are dried, preferably after addition of drying assistants, such as polyvinyl alcohol. The method of drying may be spray drying, freeze drying, or coagulation of the dispersion followed by fluidized-bed drying. Spray drying is preferred. The polymers in form of water-redispersible powders contain protective colloids in amounts of preferably 3 to 30 weight percent, based on the total weight of the polymer components.

The polymers are applied preferably in form of water-redispersible powders stabilized by one or more protective colloids.

The polymers from ethylenically unsaturated monomers may also be applied in form of polymer compositions containing one or more polymers from ethylenically unsaturated monomers, preferably stabilized by one or more protective colloids, and one or more further additives, such as hydrophobicizing additives H). Examples of such hydrophobicizing additives H) are additives H1), i.e. fatty acids or fatty acid derivatives and/or additives H2), i.e. organosilicon compounds. In general, additives H) are used in amounts of 1% to 20% by weight, preferably 1% to 10% by weight, based in each case on the total weight of the polymer composition.

Suitable for use as additives H1) are, generally, fatty acid compounds from the group consisting of fatty acids having 8 to 22 carbon atoms, their metal soaps, their amides, and their esters with monohydric alcohols having 1 to 14 carbon atoms, with glycol, with polyglycol, with polyalkylene glycol, with glycerol, with mono-, di- or triethanolamine, or with monosaccharides.

Examples for fatty acids are n-dodecanoic acid, n-tetradecanoic acid, n-hexadecanoic acid, n-octadecanoic acid and 9-dodecenoic acid. Suitable methal soaps are those of the aforementioned fatty acids with metals from main group lithium, sodium, potassium, magnesium, calcium, aluminium and zinc and with the ammonium compounds. Suitable fatty acid amides are those obtainable with mono- or diethanolamine and with the abovementioned C₈ to C₂₂ fatty acids. Fatty acid esters are for example the C₁ to C₁₄ alkyl and alkylaryl esters of the stated C₈ to C₂₂ fatty acids, preferably methyl, ethyl, propyl, butyl and ethylhexyl esters and also the benzyl esters. Suitable fatty acid esters are also the mono-, di- and polyglycol esters of the C₈ to C₂₂ fatty acids. Further suitable fatty acid esters are the monoesters and diesters of polyglycols and/or polyalkylene glycols having up to 20 oxyalkylene units, such as polyethylene glycol and polypropylene glycol. Also suitable are the mono-, di- and tri-fatty acid esters of glycerol with the stated C₈ to C₂₂ fatty acids, and also the mono-, di- and tri-fatty acid esters of mono-, di- and triethanolamine with the stated C₈ to C₂₂ fatty acids. Also suitable are the fatty acid esters of sorbitol and mannitol.

Particularly preferred are the C₁ to C₁₄ alkyl and alkylaryl esters of lauric acid and oleic acid, mono- and diglycol esters of lauric acid and oleic acid, and the mono-, di- and tri-fatty acid esters of glycerol with lauric acid and oleic acid. Suitable additives H2) are silicic esters Si(OR')₄, silanes such as tetraorganosilanes SiR₄ and organoorganoxysilanes SiRₙ(OR')₄₋ₙ with n = 1 to 3, polysilanes with preferably the general formula R₃Si(SiR₂)ₙSiR₃ with n = 0 to 500, organosilanols SiRₙ(OH)₄₋ₙ, di-, oligo- and polysiloxanes composed of units of the general formula R_{c}H_{d}Si(OR')ₑ(OH)_{f}O_{(4-c-d-e-f)/2} with c = 0 to 3, d = 0 to 1, e = 0 to 3, f = 0 to 3 and the sum c+d+e+f not more than 3.5 per unit, R in each case being identical or different and denoting branched or unbranched alkyl radicals having 1 to 22 carbon atoms, cycloalkyl radicals having 3 to 10 carbon atoms, alkylene radicals having 2 to 4 carbon atoms, and aryl, aralkyl and alkylaryl radicals having 6 to 18 carbon atoms, and R' denoting identical or different alkyl radicals and alkoxyalkylene radicals having in each case 1 to 4 carbon atoms, preferably methyl and ethyl, it also being possible for the radicals R and R' to be substituted by halogens such as Cl or by ether, thioether, ester, amide, nitrile, hydroxyl, amine, carboxyl, sulphonic acid, carboxylic anhydride and carbonyl groups, and in the case of the polysilanes it also being possible for R to have the definition OR'. Also suitable are carbosilanes, polycarbosilanes, carbosiloxanes, polycarbosiloxanes and polysilylenedisiloxanes.

Preferred additives H2) are tetramethoxysilane, tetraethoxysilane, methyltripropoxysilane, methyltri(ethoxyethoxy)silane, vinyltri(methoxyethoxy)silane, (meth)acryloyloxypropyltrimethoxysilane, (meth)acryloyloxypropyltriethoxysilane, γ-chloropropyltriethoxysilane, β-nitriloethyltriethoxysilane, γ-mercaptopropyltrimethoxysilane, γ-mercaptopropyltriethoxysilane, phenyltriethoxysilane, isooctyltriethoxysilane, n-octyltriethoxysilane, hexadecyltriethoxysilane, dipropyldiethoxysilane, methylphenyldiethoxysilane, diphenyldimethoxysilane, methylvinyltri(ethoxyethoxy)silane, tetramethyldiethoxydisilane, trimethyltrimethoxydisilane, trimethyltriethoxydisilane, dimethyltetramethoxydisilane, dimethyltetraethoxydisilane, methylhydropolysiloxanes terminally blocked with trimethylsiloxy groups, copolymers of dimethylsiloxane and methylhydrosiloxane units that are terminally blocked with trimethylsiloxy groups, dimethylpolysiloxanes, and also dimethylpolysiloxanes having Si-OH groups in the terminal units. Maximum preference is given to the organoorganoxysilanes SiRₙ(OR')₄₋ₙ with n = 1 to 3, especially isooctyltriethoxysilane, n-octyltriethoxysilane and hexadecyltriethoxysilane.

The polymer composition may be present in form of aqueous dispersions or preferably min form of water-redispersible powders. The preparation of the polymer compositions is known in the art and described for example in EP-A 1763553.

Suitable mineral binders are cement, such as Portland cement or blast funast cement, aluminate cement, silica dust cement, gypsum, waterglass or lime hydrate. Preferred is Portland cement, optionally in combination with aluminate cement.

Examples of fillers which are used are carbonates such as calcium carbonate in the form of dolomite, calcite and chalk. Further examples are silicates, such as magnesium silicate in the form of talc, or aluminium silicates such as loam and clays; quartz flour, quartz sand, highly disperse silica, feldspar, heavy spar and light spar, fillers having a pozzolanic reaction, such as fly ash, metakaolin, microsilica or rubber shreds. Also suitable are fibrous fillers. In practice, mixtures of different fillers are frequently used. Generally less than 10%, preferably less than 5% by weight gravel is applied, based on the total amount of filler. More preferably no gravel is applied.

The fillers have preferably average diameters of from 0.01 to 4 mm, particularly preferably from 0.05 to 0.5 mm.

Examples of further additives are pigments, an example being titanium dioxide as an inorganic pigment, and also the customary organic pigments. Examples of further additives are wetting agents in fractions of generally 0.1% to 0.5% by weight, based on the total weight of the respectively formulation. Examples of such are sodium or potassium polyphosphates, polyacrylic acids and salts thereof. Other additives which may be mentioned include thickeners, which are generally used in an amount of 0.01% to 2.0% by weight, based on the total weight of the respective formulation. Customary thickeners are cellulose ethers, starches, phyllosilicates, or bentonite, as an example of an inorganic thickener.

Further additives are preservatives, defoamers, air-pore formers, plasticizers, retardants, accelerants and frost preventatives.

A typical formulation for the preparation of the base layer a) contains 5% to 25% by weight, preferably 8% to 20% by weight of one or more mineral binders, 10% to 30% by weight, preferably 10% to 25% by weight of one or more polymers, and 50% to 85% by weight, preferably 60% to 80% by weight of one or more fillers, and optionally 0.01% to 5% by weight, preferably 0,1% to 2% by weight of one or more additives, the amounts in % by weight in the formulation adding up to 100% by weight. Additionally, 20% to 40% by weight of water is used, based on the total weight of the formulation?.

Polymers containing units of one or more vinyl esters and ethylene are preferred for the base layer a). The polymers applied for the preparation of the base layer a) have a glass transition temperature Tg of preferably from -20°C to +20°C. The amount of the polymers as well as the glass transition temperature Tg contributes to the flexibility of the base layer a) and works against the occurrence of cracks in the coating systems.

A typical formulation for the preparation of the middle layer b) contains 30% to 70% by weight, preferably 40% to 60% by weight of one or more mineral binders, 0.1% to 10% by weight, preferably 0.5% to 5% by weight of one or more polymers, and 10% to 50% by weight, preferably 20% to 40% by weight of one or more light weight aggregates, 10% to 30% by weight, preferably 15% to 25% by weight of one or more fillers other than light weight aggregate, 0% to 5% by weight, preferably 0.1% to 2% by weight of one or more additives, preferably plasticizers or retardants, the amounts in % by weight in the formulation adding up to 100% by weight. Additionally, 20% to 30% by weight of water is used, based on the total weight of the formulation.

The middle layer b) contains as light weight aggregate selected from vermiculite, perlite, poraver glass beads, hollow glass spheres, pumice, expanded clays or shales, like ridgelite or utelite, sintered pulverised fuel ash or various blends thereof. More preferred light weight aggregate are perlite, poraver glass beads or vermiculite. The light weight aggregates have preferably an average diameter of from 1 to 4 mm, particularly preferably from 2 to 4 mm.

The middle layer b) contains preferably superfine filler, such as micro silica, silica flour, calcium carbonate, preferably in combination with the above mentioned fillers. The amount of superfine filler is preferably 1% to 5% by weight, more preferably 1.5% to 4% by weight, based on the total amount of fillers. The application of superfine filler reduces the number of pores or pore volume of the coating system and improves the density of the coating system.

The mineral binder applied for the middle layer b) is preferably a combination of an aluminate cement and one or more further mineral binders. The ratio of aluminate cement to cement is preferably 1 to 3 till 3 to 1. These measures accelerate the manufacturing speed of the coating system.

Polymers containing units of one or more vinyl esters and ethylene are preferred for the middle layer b).

A typical formulation for the preparation of the top layer c) contains 35% to 50% by weight, preferably 40% to 50% by weight of one or more mineral binders, 1% to 5% by weight, preferably 1% to 5% by weight of one or more polymers and/or one or more polymer compositions containing one or more hydrophobicizing additives H), and 40% to 60% by weight, preferably 45% to 55% by weight of filler, 0% to 5% by weight, preferably 0,05% to 2% by weight of one or more additives, such as thickeners or pigments, the amounts in % by weight in the formulation adding up to 100% by weight. Additionally, 20% to 40% by weight, preferably 20% to 30% by weight of water is used, based on the total weight of the formulation.

Polymers containing units of vinyl chloride, one or more vinyl esters, such as vinyl acetate and/or vinyl laurate, and ethylene are preferred for the top layer c).

Coating agents a), b) or c) are prepared from the constituents of the respective formulation for the base layer a), the middle layer b) or the top layer c). The preparation of the coating agents is not associated with any specific measure and can be performed with well-known equipment. Preferably, the dry components of each formulation are mixed first and water as well as liquid components are added subsequently.

Appropriate undergrounds for the base layer a) are cement bonded undergrounds, such as concrete or screeds, rocks or boulders, for instance.

Each of the coating agents a), b) and c) might be applied by manual methods or mechanical methods, such as spraying machines. The coating agents are for usually applied at temperatures common in the construction sector, such as at temperatures from 0 to 50°C. For the preparation of the coating system the underground is coated with one or more layers of coating agent a), upon which one or more layers of coating agent b) are applied, upon which one or more layers of coating agent c) are applied. The middle layer b) is applied preferably directly onto the base layer a). The top layer c) is applied preferably directly onto the middle layer b). In general, the coating agents a), b) and c) have set before another coating agent is applied onto it.

Alternatively the underground might be coated with one or more primers, before the application of the coating agent a). Alternatively, but less preferred there might be applied a further coating between the layer a) and b) or between the middle layer b) and the top layer c). Furthermore, top layer c) might be coated with a finishing, such as tile.

In general, the coating agent b) is applied 0.5 to 10 days, more preferably 1 to 5 after the application of the coating agent a). The coating agent c) is generally applied 0.5 to 10 days, more preferably 1 to 5 after the application of the coating agent b). The whole coating system has set preferably 10 days, more preferably 7 days after the application of the base coating a).

The thickness of the base layer a) is preferably 0.1 to 1 cm, more preferably 0.2 to 0.4 cm. The thickness of the middle layer b) is preferably 1 to 5 cm, more preferably 2 to 3 cm. The thickness of the top layer c) is preferably 0.1 to 1 cm, more preferably 0.2 to 0.4 cm. The thickness of the entire coating systems is preferably 2 to 7 cm, more preferably 2 to 4 cm.

The most preferred application of the coating systems is for roofing systems.

Advantageously, the preparation of the instant coating system is very effective with respect to the production time as well as the logistic efforts at the building site. The raw materials exist in a uniform form and may be furnished to the construction site as a ready to use premix such that for each of the coating layers only one coating agent needs to be handled and the coating agents for the different layers may be applied in the same way, for example with the same machines. Furthermore, the instant coating system shows excellent technical performance, such as high water proofness, flexibility with respect to mechanical strain, solar irradiation, thermal insulation against heat or cold as well as sound dampening.

But the most important aspect of the instant invention is the synergistic effect of the different layers a), b) and c) which results in a surprisingly high durability of the system, e.g. a very high resistance against demands typical for coating systems, particularly roofing systems, such as for example heat, cold, water and frost, solar irradiation or corrosive air. This prolongs the lifetime of the coating system as well as the entire building and reduces the need for restauration which is very cost intensive.

The examples which follow serve to illustrate the invention further.

The coating agent a) was prepared by mixing the following components as described in EN 14891:2006:

| | |
|---|---|
| Sand (0-0.3mm) | 55% per weight, |
| Grey Cement | 12% per weight, |
| Calcium Carbonate (filler) | 10% per weight, |
| Foamaster (anti-foaming agent) | 0.2% per weight, |
| Bentonil CF (filler) | 1.5% per weight, |
| Micro Silica | 0.55% per weight, |
| Arbocel BC 1000 (additive) | 0.75% per weight, |
| Vinnapas 5044N* | 20% per weight, |
| and 50% by water, based on the total weight of the dry components of the recipe. | |

| | |
|---|---|
| *: Polyvinyl alcohol stabilized vinyl acetate-ethylene copolymer in the form of a water-redispersible powder; | |

Coating agent a) was applied with a straight edge trowel on a concrete substrate to give the base layer a) having a thickness of 0.3 cm. After storage for 28 days under standard conditions as defined in EN 14891:2006 the base layer a) was tested as per EN 14891:2006. The results are summarized in Table 1.

**Table 1: Test results obtained with the base layer a):**

| Tests according to EN14891:2006: | Base layer a) |
|---|---|
| Tensile Adhesion [N/mm²] | 1.74 |
| Hydrostatic Pressure | Withstand 1.5 bars for 7 days |
| Crack bridging ability [mm] | 0.60 |

The coating agent b) was prepared by mixing the following components as described in EN 196-1:2004:

| | |
|---|---|
| Portland Cement CEM 42.5 | 10.9 per weight, |
| Cement Fondu (HAC) | 21.8 per weight, |
| Hydrated Lime (a mineral binder) | 0.87 per weight, |
| Citric Acid (additive) | 0.35 per weight, |
| Anhydrate - selecta (a mineral binder) | 11.63 per weight, |
| Super plasticiser - Melflux PP 100F | 0.28 per weight, |
| Silica sand (0-300 mic) | 17.24 per weight, |
| VINNAPAS 5044 N* | 2.0 per weight, |
| Perlite (1-4 mm) | 32.5 per weight, |
| Micro Silica | 2.43 per weight, |
| and 25% by water, based on the total weight of the dry components of the recipe. | |

| | |
|---|---|
| *: Polyvinyl alcohol stabilized vinyl acetate-ethylene copolymer in the form of a water-redispersible powder; | |

Coating agent b) was applied with a straight edge trowel on a concrete substrate to give the middle layer b) having a thickness of 2.5 cm. The middle layer b) was tested as per EN13813:2005 after storage for a time specified in Table 2 under standard conditions according to EN 13813:2005. The results are summarized in Table 2.

**Table 2: Test results obtained with the middle layer b):**

| | Middle layer b) [N/mm²] |
|---|---|
| Compressive Strength after 7 days | 12.67 |
| Compressive Strength after 28 days | 16.06 |
| Compressive Strength after 28 days | 3.37 |
| Flexural Strength after 7 days | 2.22 |

The coating agent c) was prepared by mixing the following components as described in EN 196-1: 2004:

| | |
|---|---|
| White Cement | 45 per weight, |
| Sand (0-0.6 mm) | 51.5 per weight, |
| Walocel MKX 6000 PF01 | |
| (methyl cellulose; thickener) | 0.2 per weight, |
| Vinnapas 8034 H* | 3 per weight, |
| Bentonil CF (filler) | 0.3 per weight, |
| and 25% by water, based on the total weight of the dry components of the recipe. | |

| | |
|---|---|
| *: Polyvinyl alcohol stabilized polymer composition in the form of a water-redispersible powder containing calcium stearate and a terpolymer from vinyl chloride, vinyl acetate and ethylene; | |

Coating agent c) was applied with a straight edge trowel on a concrete substrate to give the top layer c) having a thickness of 0.3 cm. After storage for 28 days under standard conditions as defined in EN 14891 the top layer c) tested as per EN 14891. The results are summarized in Table 3.

**Table 3: Test results obtained with the top layer c):**

| | Top layer c) |
|---|---|
| Compressive Strength [N/mm²] | 33.5 |
| Flexural Strength [N/mm²] | 8.7 |
| Shrinkage [mm/m] | 1.71 |
| Water Impermeability - EN 14891 | Withstand 1.5 bar for 7 days |

A coating system was constructed by performing the following steps in the following order:
- the coating agent a) from the above described experiment was applied with a straight edge trowel on a concrete substrate to give a layer having a thickness of 0.3 cm;
- storage of the thus obtained layer for 3 days under standard conditions as defined in EN 14891:2006 gave the base layer a);
- the coating agent b) from the above described experiment was applied with a straight edge trowel on the aforementioned base layer a);
- the thus obtained coating system was stored for 3 days under standard conditions as defined in EN 14891:2006; afterwards, the coating system based on coating agents a) and b) had a thickness of 2.8 cm;
- the coating agent c) from the above described experiment was applied with a straight edge trowel on the aforementioned coating system based on coating agents a) and b);
- the thus obtained coating system was stored for 1 day under standard conditions as defined in EN 14891:2006; afterwards, the entire coating system, e.g. the coating system based on coating agents a), b) and c) had a thickness of 3.1 cm.

The entire coating system was tested against the following two standards:
1) The thermal conductivity as per ASTM C 518 and the results were in average 0.2 W/m.K. The specimen was conditioned in such a way that change in mass within 24 hours was less than 1%. The conditioning of the specimen was carried out in accordance to ASTM C 518-02. Caluse 7.3.
2) The sound insulation test as per ASTM E-90: 2004. The improved STC by using the system was by 4 dB.

## Claims

1. Coating systems comprising a) a base layer, b) a middle layer and c) a top layer, whereby each of the layers a), b) and c) is based on
mineral binder selected from the group comprising cement, gypsum, waterglass and lime hydrate,
filler selected from the group comprising carbonates, silicates, quartz flour, quartz sand, highly disperse silica, feldspar, heavy spar, light spar, fillers having a pozzolanic reaction, rubber shreds and fibrous fillers, polymers from one or more ethylenically unsaturated monomers from the group comprising vinyl esters of carboxylic acids having from 1 to 15 carbon atoms,
methacrylic esters or acrylic esters of carboxylic acids with unbranched or branched alcohols having from 1 to 15 carbon atoms, olefins and dienes, vinylaromatics and vinyl halides and
optional further additives, and
whereby the middle layer contains additionally light weight aggregates selected from the group comprising vermiculite, perlite, poraver glass beads, hollow glass spheres, pumice, expanded clays, shales and sintered pulverised fuel ash.

2. Coating systems according to claim 1, **characterized in that** the polymers are applied in form of polymer compositions containing one or more polymers from ethylenically unsaturated monomers and one or more hydrophobicizing additives H) from the group comprising H1) fatty acids or fatty acid derivatives and H2) organosilicon compounds.

3. Coating systems according to claims 1 to 2, **characterized in that** the fillers have average diameters of from 0.01 to 4 mm.

4. Coating systems according to claims 1 to 3, **characterized in that** the formulation for the preparation of the base layer a) contains 5% to 25% by weight of one or more mineral binders, 10% to 30% by weight of one or more polymers, and 50% to 85% by weight of one or more fillers, and optionally 0.01% to 5% by weight of one or more additives, the amounts in % by weight in the formulation adding up to 100% by weight.

5. Coating systems according to claims 1 to 4, **characterized in that** the formulation for the preparation of the middle layer b) contains 30% to 70% by weight of one or more mineral binders, 0.1% to 10% by weight of one or more polymers, and 10% to 50% by weight of one or more light weight aggregates, 10% to 30% by weight of one or more fillers other than light weight aggregate, and optionally 0% to 5% one or more additives, the amounts in % by weight in the formulation adding up to 100% by weight.

6. Coating systems according to claims 1 to 5, **characterized in that** the formulation for the preparation of the middle layer b) contains additionally one or more superfine fillers selected from the group comprising micro silica, silica flour and calcium carbonate.

7. Coating systems according to claims 1 to 6, **characterized in that** the formulation for the preparation of the top layer c) contains 35% to 50% by weight of one or more mineral binders, 1% to 5% by weight of one or more polymers and/or polymer compositions containing one or more hydrophobicizing additives H), and 40% to 60% by weight of one or more fillers, and optionally 0% to 5% by weight of one or more additives, the amounts in % by weight in the formulation adding up to 100% by weight.

8. Coating systems according to claims 1 to 7, **characterized in that** at least one polymer of the top layer c) contains one or more monomer units selected from the group comprising vinyl chloride, vinyl ester and ethylene.

9. Coating systems according to claims 1 to 8, **characterized in that** the thickness of the base layer a) is 0.1 to 1 cm, the thickness of the middle layer b) is 1 to 5 cm, the thickness of the top layer c) is 0.1 to 1 cm.

10. Coating systems according to claims 1 to 9, **characterized in that** the coating systems are roofing systems.

11. Processes for the preparation of the coating systems according to claims 1 to 10, **characterized in that** an underground is coated with one or more layers of coating agent a), upon which one or more layers of coating agent b) are applied, upon which one or more layers of coating agent c) are applied.

## Patentansprüche

1. Beschichtungssysteme, umfassend a) eine Basisschicht, b) eine Mittelschicht und c) eine Oberschicht, wobei jede der Schichten a), b) und c) auf
mineralischem Bindemittel aus der Gruppe umfassend Zement, Gips, Wasserglas und Kalkhydrat,
Füllstoff aus der Gruppe umfassend Carbonate, Silicate, Quarzmehl, Quarzsand, hochdisperse Kieselsäure, Feldspat, Scherspat, Leichtspat, puzzolanisch reagierende Füllstoffe, Gummischnipsel und faserförmige Füllstoffe,
Polymere aus einem oder mehreren ethylenisch ungesättigten Monomeren aus der Gruppe umfassend Vinylester von Carbonsäuren mit 1 bis 15 Kohlenstoffatomen, Methacrylsäurester oder Acrylsäureester von Carbonsäuren mit unverzweigten oder verzweigten Alkoholen mit 1 bis 15 Kohlenstoffatomen, Olefine und Diene, Vinylaromaten und Vinylhalogenide und
fakultative weitere Additive
basiert und
wobei die Mittelschicht zusätzlich Leichtzuschläge aus der Gruppe umfassend Vermiculit, Perlit, Poraver-Glasperlen, Glashohlkugeln, Bimsstein, expandierte Tone, Schiefer und gesinterte pulverisierte Brennstoffasche enthält.

2. Beschichtungssysteme nach Anspruch 1, **dadurch gekennzeichnet, dass** die Polymere in Form von Polymerzusammensetzungen, die ein oder mehrere Polymere aus ethylenisch ungesättigten Monomeren und ein oder mehrere hydrophobierende Additive H) aus der Gruppe umfassend H1) Fettsäuren oder Fettsäurederivate und H2) Organosiliciumverbindungen enthalten, angewendet werden.

3. Beschichtungssysteme nach den Ansprüchen 1 bis 2, **dadurch gekennzeichnet, dass** die Füllstoffe mittlere Durchmesser von 0,01 bis 4 mm aufweisen.

4. Beschichtungssysteme nach den Ansprüchen 1 bis 3, **dadurch gekennzeichnet, dass** die Formulierung zur Herstellung der Basisschicht a) 5 bis 25 Gew.-% eines oder mehrerer mineralischer Bindemittel, 10 bis 30 Gew.-% eines oder mehrerer Polymere und 50 bis 85 Gew.-% eines oder mehrerer Füllstoffe und gegebenenfalls 0,01 bis 5 Gew.-% eines oder mehrerer Additive enthält, wobei sich die Mengen in Gew.-% in der Formulierung zu 100 Gew.-% summieren.

5. Beschichtungssysteme nach den Ansprüchen 1 bis 4, **dadurch gekennzeichnet, dass** die Formulierung zur Herstellung der Mittelschicht b) 30 bis 70 Gew.-% eines oder mehrerer mineralischer Bindemittel, 0,1 bis 10 Gew.-% eines oder mehrerer Polymere und 10 bis 50 Gew.-% eines oder mehrerer Leichtzuschläge, 10 bis 30 Gew.-% eines oder mehrerer Füllstoffe, die von Leichtzuschlägen verschieden sind, und gegebenenfalls 0 bis 5 Gew.-% eines oder mehrerer Additive enthält, wobei sich die Mengen in Gew.-% in der Formulierung zu 100 Gew.-% summieren.

6. Beschichtungssysteme nach den Ansprüchen 1 bis 5, **dadurch gekennzeichnet, dass** die Formulierung zur Herstellung der Mittelschicht b) zusätzlich einen oder mehrere superfeine Füllstoffe aus der Gruppe umfassend Mikrosilika, Quarzgutmehl und Calciumcarbonat enthält.

7. Beschichtungssysteme nach den Ansprüchen 1 bis 6, **dadurch gekennzeichnet, dass** die Formulierung zur Herstellung der Oberschicht c) 35 bis 50 Gew.-% eines oder mehrerer mineralischer Bindemittel, 1 bis 5 Gew.-% eines oder mehrerer Polymere und/oder Polymerzusammensetzungen, die ein oder mehrere hydrophobierende Additive H) enthalten, und 40 bis 60 Gew.-% eines oder mehrerer Füllstoffe und gegebenenfalls 0 bis 5 Gew.-% eines oder mehrerer Additive enthält, wobei sich die Mengen in Gew.-% in der Formulierung zu 100 Gew.-% summieren.

8. Beschichtungssysteme nach den Ansprüchen 1 bis 7, **dadurch gekennzeichnet, dass** mindestens ein Polymer der Oberschicht c) eine oder mehrere Monomereinheiten aus der Gruppe umfassend Vinylchlorid, Vinylester und Ethylen enthält.

9. Beschichtungssysteme nach den Ansprüchen 1 bis 8, **dadurch gekennzeichnet, dass** die Dicke der Basisschicht a) 0,1 bis 1 cm beträgt, die Dicke der Mittelschicht b) 1 bis 5 cm beträgt und die Dicke der Oberschicht c) 0,1 bis 1 cm beträgt.

10. Beschichtungssysteme nach den Ansprüchen 1 bis 9, **dadurch gekennzeichnet, dass** es sich bei den Beschichtungssystemen um Bedachungssysteme handelt.

11. Verfahren zur Herstellung der Beschichtungssysteme nach den Ansprüchen 1 bis 10, **dadurch gekennzeichnet, dass** man einen Untergrund mit einer oder mehreren Schichten von Beschichtungsmittel a) beschichtet, worauf man eine oder mehrere Schichten von Beschichtungsmittel b) aufbringt, worauf man eine oder mehrere Schichten von Beschichtungsmittel c) aufbringt.

## Revendications

1. Systèmes de revêtement comprenant a) une couche de base, b) une couche intermédiaire et c) une couche supérieure, chacune des couches a), b) et c) étant basée sur
un liant minéral choisi dans le groupe comprenant le ciment, le gypse, le verre soluble et la chaux éteinte,
une charge choisie dans le groupe comprenant les carbonates, les silicates, la farine de quartz, le sable de quartz, la silice hautement dispersée, le feldspath, le spath pesant, le spath léger, les charges ayant une réaction pouzzolanique, les lambeaux de caoutchouc et les charges fibreuses, les polymères issus d'un ou plusieurs monomères éthyléniquement insaturés du groupe comprenant les esters vinyliques d'acides carboxyliques portant de 1 à 15 atomes de carbone, les esters méthacryliques ou les esters acryliques d'acides carboxyliques avec des alcools non ramifiés ou ramifiés portant de 1 à 15 atomes de carbone, les oléfines et les diènes, les aromatiques vinyliques et les halogénures de vinyle, et
d'autres additifs facultatifs, et
la couche intermédiaire contenant également des agrégats légers choisis dans le groupe comprenant la vermiculite, la perlite, les billes de verre Poraver, les sphères de verre creuses, la pierre ponce, les argiles expansées, les schistes et les cendres volantes frittées.

2. Systèmes de revêtement selon la revendication 1, **caractérisés en ce que** les polymères sont appliqués sous forme de compositions polymères contenant un ou plusieurs polymères issus de monomères éthyléniquement insaturés et un ou plusieurs additifs d'hydrophobisation H) du groupe comprenant H1) les acides gras ou les dérivés d'acides gras et H2) les composés organosiliciés.

3. Systèmes de revêtement selon les revendications 1 et 2, **caractérisés en ce que** les charges ont des diamètres moyens de 0,01 à 4 mm.

4. Systèmes de revêtement selon les revendications 1 à 3, **caractérisés en ce que** la formulation pour la préparation de la couche de base a) contient 5 % à 25 % en poids d'un ou plusieurs liants minéraux, 10 % à 30 % en poids d'un ou plusieurs polymères, et 50 % à 85 % en poids d'une ou plusieurs charges, et éventuellement 0,01 % à 5 % en poids d'un ou plusieurs additifs, la somme des quantités en % en poids dans la formulation faisant 100 % en poids.

5. Systèmes de revêtement selon les revendications 1 à 4, **caractérisés en ce que** la formulation pour la préparation de la couche intermédiaire b) contient 30 % à 70 % en poids d'un ou plusieurs liants minéraux, 0,1 % à 10 % en poids d'un ou plusieurs polymères, et 10 % à 50 % en poids d'un ou plusieurs agrégats légers, 10 % à 30 % en poids d'une ou plusieurs charges autres que des agrégats légers, et éventuellement 0 % à 5 % d'un ou plusieurs additifs, la somme des quantités en % en poids dans la formulation faisant 100 % en poids.

6. Systèmes de revêtement selon les revendications 1 à 5, **caractérisés en ce que** la formulation pour la préparation de la couche intermédiaire b) contient également une ou plusieurs charges extra-fines choisies dans le groupe comprenant la microsilice, la farine de silice et le carbonate de calcium.

7. Systèmes de revêtement selon les revendications 1 à 6, **caractérisés en ce que** la formulation pour la préparation de la couche supérieure c) contient 35 % à 50 % en poids d'un ou plusieurs liants minéraux, 1 % à 5 % en poids d'un ou plusieurs polymères et/ou compositions polymères contenant un ou plusieurs additifs d'hydrophobisation H), et 40 % à 60 % en poids d'une ou plusieurs charges, et éventuellement 0 % à 5 % en poids d'un ou plusieurs additifs, la somme des quantités en % en poids dans la formulation faisant 100 % en poids.

8. Systèmes de revêtement selon les revendications 1 à 7, **caractérisés en ce qu'**au moins un polymère de la couche supérieure c) contient un ou plusieurs motifs monomères choisis dans le groupe comprenant le chlorure de vinyle, l'ester vinylique et l'éthylène.

9. Systèmes de revêtement selon les revendications 1 à 8, **caractérisés en ce que** l'épaisseur de la couche de base a) est de 0,1 à 1 cm, l'épaisseur de la couche intermédiaire b) est de 1 à 5 cm, l'épaisseur de la couche supérieure c) est de 0,1 à 1 cm.

10. Systèmes de revêtement selon les revendications 1 à 9, **caractérisés en ce que** les systèmes de revêtement sont des systèmes de toiture.

11. Procédés de préparation des systèmes de revêtement selon les revendications 1 à 10, **caractérisés en ce qu'**un fond est recouvert d'une ou plusieurs couches d'agent de revêtement a), sur lesquelles une ou plusieurs couches d'agent de revêtement b) sont appliquées, sur lesquelles une ou plusieurs couches d'agent de revêtement c) sont appliquées.
